(19) **Europäisches Patentamt / European Patent Office / Office européen des brevets**

(11) **EP 1 905 735 B1**

(12) **EUROPEAN PATENT SPECIFICATION**

(45) Date of publication and mention of the grant of the patent:
**14.09.2011 Bulletin 2011/37**

(21) Application number: **06781190.1**

(22) Date of filing: **18.07.2006**

(51) Int Cl.:
**C01B 3/08** (2006.01)     **B22F 1/00** (2006.01)
**B22F 9/04** (2006.01)     **H01M 8/06** (2006.01)

(86) International application number:
**PCT/JP2006/314177**

(87) International publication number:
**WO 2007/010897 (25.01.2007 Gazette 2007/04)**

(54) **HYDROGEN-GENERATING MATERIAL AND PROCESS FOR PRODUCING HYDROGEN-GENERATING MATERIAL**

WASSERSTOFFERZEUGENDES MATERIAL UND VERFAHREN ZUR HESTELLUNG VON WASSERSTOFFERZEUGENDEM MATERIAL

MATIÈRE GÉNÉRANT DE L'HYDROGÈNE ET PROCÉDÉ DE PRODUCTION D'UNE MATIÈRE GÉNÉRANT DE L'HYDROGÈNE

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.07.2005 JP 2005209325**
**24.03.2006 JP 2006083467**
**17.04.2006 JP 2006113209**

(43) Date of publication of application:
**02.04.2008 Bulletin 2008/14**

(73) Proprietor: **Hitachi Maxell Energy, Ltd.**
**Oyamazaki-cho,**
**Otokuni-gun,**
**Kyoto 618-8525 (JP)**

(72) Inventors:
• **MIKI, Takeshi**
**c/o HITACHI MAXELL, LTD.,**
**Osaka 567-8567 (JP)**

• **NAKAI, Toshihiro**
**c/o HITACHI MAXELL, LTD.,**
**Osaka 567-8567 (JP)**
• **KAWABE, Keisuke**
**c/o HITACHI MAXELL, LTD.,**
**Osaka 567-8567 (JP)**
• **SAIBARA, Shoji**
**c/o HITACHI MAXELL, LTD.,**
**Osaka 567-8567 (JP)**

(74) Representative: **Menges, Christian Alexander et al**
**Diehl & Partner GbR**
**Augustenstr. 46**
**80333 München (DE)**

(56) References cited:
EP-A- 1 757 557     EP-A- 1 867 603
WO-A-02/14213     WO-A1-2006/073113
JP-A- 05 117 722     JP-A- 2004 138 217
JP-A- 2004 231 466     JP-A- 2004 231 466
JP-A- 2004 505 879     JP-A- 2005 162 552

**Description**

Technical Field

The present invention relates to a hydrogen generating material that can react with water to produce hydrogen and a method for producing the hydrogen generating material.

Background Art

With the recent widespread use of cordless equipment such as a personal computer or portable telephone, secondary batteries used as a power source of cordless equipment are increasingly required to have a smaller size and higher capacity At present, a lithium ion secondary battery that can achieve a small size, light weight, and high energy density is being put to practical use and growing in demand as a portable power source. However, depending on the type of cordless equipment to be used, the lithium ion secondary battery is not yet reliable enough to ensure a continuous available time.

Under these circumstances, a polymer electrolyte fuel cell has been studied as an example of a battery that may meet the above requirements. The polymer electrolyte fuel cell uses a polymer electrolyte membrane as an electrolyte, oxygen in the air as a positive active material, and a fuel (hydrogen, methanol, etc.) as a negative active material, and has attracted considerable attention because it is a battery that can be expected to have a higher energy density than a lithium ion secondary battery. Fuel cells can be used continuously as long as a fuel and oxygen are supplied.

Although there are several candidates for fuels used for the fuel cells, the individual fuels have various problems, and a final decision has not been made yet.

For example, when a fuel cell uses hydrogen as a fuel, a method for supplying hydrogen stored in a high-pressure tank or hydrogen-storing alloy tank is employed to some extent. However, the disadvantage of a fuel cell using such a tank is that it is not suitable for a portable power source, since both the volume and the weight of the fuel cell are increased, and the energy density is reduced.

When a fuel cell uses a hydrocarbon fuel, another method for extracting hydrogen by reforming the hydrocarbon fuel may be employed. However, this type of fuel cell requires a reformer and thus poses problems such as supply of heat to the reformer and thermal insulation. Therefore, this fuel cell is not suitable for a portable power source either.

Moreover, a direct methanol fuel cell, in which methanol is used as a fuel and reacts directly at the electrode, is miniaturized easily and expected to be a future portable power source. However, a direct methanol fuel cell causes a reduction in both voltage and energy density due to a crossover phenomenon in which methanol at the negative electrode passes through the solid electrolyte and reaches the positive electrode.

On the other hand, a method for generating hydrogen by reacting a metal such as aluminum, magnesium, silicon or zinc with water at a low temperature of 100°C or less also has been proposed to use the hydrogen as a fuel of a fuel cell (Patent Documents 1 to 5).

Patent Document 1: US 6,506,360

Patent Document 2: JP 2566248 B2
Patent Document 3: JP 2004-231466 A
Patent Document 4: JP 2001-31401 A
Patent Document 5: US 6,582,676

For example, Patent Documents 1 to 3 disclose methods allowing aluminum to react with an alkali or acid. Although these methods easily can produce hydrogen chemically, the equivalent weight of the alkali or acid corresponding to aluminum needs to be added, which in turn reduces the energy density because a large proportion of the material is other than the hydrogen source. Thus, the above methods are not necessary suitable for miniaturization. Moreover, the reaction product (oxide or hydroxide) forms a film on the surface of the aluminum, so that water cannot come into contact with the aluminum inside the film. This may lead to a problem that the oxidation reaction stops while only at the surface of the aluminum.

Patent Document 4 is intended to avoid the above problem by removing the film mechanically from the aluminum surface. However, the device should have mechanical equipment for removal of the film and becomes larger.

In Patent Document 5, alumina is added as a catalyst to suppress the formation of a hydroxide film, and a metal such as aluminum and the catalyst are mixed in a Spex mill to form a composite material. The reactivity of aluminum can be improved by using the composite material. However, a large amount of the catalyst is required to obtain a sufficient effect. Such an increase in the catalyst may reduce the content of the metal (aluminum) that serves as a hydrogen source, thus reducing the amount of hydrogen generated.

On the other hand, the surface area of aluminum or its alloy used as a hydrogen source is increased by pulverizing them, and consequently the hydrogen generation rate is improved. Therefore, when aluminum or aluminum alloy is pulverized in water, the powdered aluminum or aluminum alloy reacts immediately with the water to produce hydrogen and is changed into an aluminum oxide or hydroxide. Thus, the pulverized powder includes only a very small amount of aluminum in the metallic state. Even if such a powder is used as a hydrogen generating material, there should be a limit to the amount of hydrogen generated.

When aluminum is pulverized by a dry process, it is stretched in the form of a foil and broken into a flake powder having metallic luster. In this case, an organic substance such as a stearic acid or stearate is added generally to prevent the aluminum particles from sticking together into a lump that cannot be pulverized. Accordingly, the surface of the aluminum flake powder obtained by the dry process is covered with the organic substance such as a stearic acid, and in general the carbon content is higher than 1 wt% of the total weight of the metal powder.

However, if the organic substance such as a stearic acid or stearate is present on the surface, the aluminum powder has a low affinity for water, i.e., poor water wettability. Therefore, the aluminum powder is not likely to react with water, so that a hydrogen producing reaction does not occur easily.

Disclosure of Invention

A hydrogen generating material of the present invention is defined in claim 9, and a use thereof is defined in claim 15.

A method for producing a hydrogen generating material of the present invention is defined in claim 1.

The present invention can provide a hydrogen generating material that allows hydrogen to be generated easily and efficiently by reacting with water, so that the production of hydrogen can be performed easily and efficiently. The use of the hydrogen generating material of the present invention as a hydrogen source can achieve both small size and high efficiency of a hydrogen generator or fuel cell.

Brief Description of Drawings

FIG. 1 is a schematic cross-sectional view showing an example of an apparatus for the reaction between a hydrogen generating material of the present invention and water.

FIG. 2 is a schematic cross-sectional view showing an example a fuel cartridge filled with a hydrogen generating material of the present invention.

FIG. 3 is a scanning electron micrograph of a material powder of aluminum produced by an atomizing method.

FIG. 4 is a scanning electron micrograph of an aluminum powder pulverized using methanol as a treatment solvent in Example 1 of the present invention.

FIG. 5 is a scanning electron micrograph of an aluminum powder pulverized using 2-methyl-1-propanol as a treatment solvent in Example 1 of the present invention.

FIG. 6 is a scanning electron micrograph of aluminum powder in Comparative Example 3 in which a pulverizing process is performed with the addition of stearate.

Best Mode for Carrying Out the Invention

The best mode for carrying out the present invention will be described in detail. The present inventors studied effective solutions to the above problems and found out that when aluminum was pulverized mechanically in an organic solvent that has a corrosive effect, i.e., causes corrosion on aluminum, the aluminum particles could be pulverized without sticking together. The present inventors also realized such a method produced an aluminum powder that has a high affinity for water and is capable of reacting easily with water to produce hydrogen. This is why the present invention was made. The present invention can provide an aluminum flake powder that includes a high proportion of aluminum in the metallic state and reduces the amount of an organic substance present on the surface.

In producing an aluminum powder of the hydrogen generating material of the present invention, the treatment solvent used in the pulverizing process includes an organic solvent that is corrosive to aluminum. As the organic solvent, e.g., alcohols (methanol, ethanol, etc), organic acids with a carbon number of 10 or less (oxalic acid, acetic acid, citric acid, etc), and N-methylpyrrolidone can be used. In view of the reactivity with aluminum or the surface properties of an aluminum powder to be produced, the alcohols are particularly suitable. If the material is in the solid state at room temperature like an oxalic acid, it may be melted by heating or dissolved in another organic solvent that can dissolve the material. The organic solvent that is corrosive to aluminum may be used individually or in combination of two or more.

In addition to methanol and ethanol, examples of the alcohols include propanol, butanol, isopropanol, 2-methyl-1-propanol, benzyl alcohol, and ethoxyethanol.

The treatment solvent used in the pulverizing process may include other solvents, e.g., an organic solvent that is inactive to aluminum as well as the organic solvent that is corrosive to aluminum. Moreover, a mixture of these solvents may be used. When the hydrogen generating material is pulverized with only the organic solvent that is corrosive to aluminum, the corrosion of the aluminum may proceed more than necessary during the pulverizing process, depending on the type of solvent or the pulverization conditions. This may lead to a decrease in the amount of aluminum remaining in the metallic state, and thus may reduce the amount of hydrogen generated by the reaction between the resultant material and water. In such a case, the treatment solvent includes the organic solvent that is inactive to aluminum, thereby controlling the corrosive effect on aluminum appropriately. Further, the surface properties or the like of an aluminum powder to be produced can be controlled easily within a preferred range.

Specific examples of the organic solvent that is inactive to aluminum include an aromatic hydrocarbon such as toluene, an aliphatic hydrocarbon such as hexane or dicyclohexane, ketones such as acetone, and ethers. Among them, the solvent combined with the organic solvent that is corrosive to aluminum into an azeotropic mixture is preferred, since the treatment solvent can be evaporated and dried easily in a drying process after pulverization.

To form the azeotropic mixture, the organic solvent that is inactive to aluminum varies depending on the type of the organic solvent that is corrosive to aluminum. For example, if the organic solvent that is corrosive to aluminum is alcohol, toluene or cyclohexane may be selected.

In the pulverizing process, the treatment solvent includes 1 wt% or more, and preferably 5 wt% or more of the organic solvent that is corrosive to aluminum in view of the reaction efficiency. The organic solvent that is corrosive to aluminum can make up the total weight of the treatment solvent.

The amount of the treatment solvent with respect to aluminum is adjusted so that the organic solvent that is corrosive to aluminum is 0.1 parts by weight or more per 1 part by weight of aluminum to be pulverized. In the treatment solvent, if the concentration of the organic solvent that is corrosive to aluminum is too low or its relative amount to aluminum is too small, the aluminum particles stick together during pulverization, so that the hydrogen generation efficiency may be reduced when the pulverized powder reacts with water.

Although the treatment solvent may include water, a reaction of the powdered aluminum and the water in the solvent occurs and reduces the proportion of aluminum in the metallic state. Therefore, the moisture content of the treatment solvent is as low as possible, and preferably 1 wt% or less.

As the metal powder of the hydrogen generating material of the present invention, an aluminum alloy powder also can be used in addition to the aluminum powder. The metal powder is produced by pulverizing a material such as aluminum or aluminum alloy while its surface is wetted with the treatment solvent. In the present invention, the aluminum surface reacts with the organic solvent when pulverized, and an organoaluminum compound such as alkoxide may be formed temporarily on the surface of the aluminum powder after pulverization. Since the reactivity of alkoxide is high among the organoaluminum compounds, the aluminum powder with such a compound formed on the surface is expected to be a highly reactive powder that can react immediately with water to produce hydrogen. On the other hand, this metal powder may have a problem of handling because its flammability in the air is enhanced. However, when the pulverization of aluminum is not performed in an inert atmosphere, but in an oxygen-containing atmosphere by introducing the air or the like, alkoxide of the aluminum powder is decomposed immediately and changed to an aluminum oxide (or hydroxide). Thus, the surface of the aluminum powder is stabilized after the pulverizing process, and it becomes easier to handle the aluminum powder. Moreover, even if the treatment solvent includes a small amount of water, the surface of the aluminum powder can be stable in the same manner.

As described above, the surface reactivity may be reduced due to the stabilization of the surface of the aluminum powder, compared to the aluminum powder with the surface on which alkoxide is formed. However, the aluminum powder formed by pulverization is in the form of a flake, so that the distance between the core and the surface of each particle is small enough for the whole metal powder to react easily with water. Thus, the efficiency of the hydrogen producing reaction can be improved.

The aluminum alloy may have any composition as long as the main component is aluminum. Examples of the alloying element include silicon, iron, copper, manganese, magnesium, zinc, nickel, titanium, lead, tin, and chromium. In view of the fact that a larger amount of hydrogen is generated by increasing the proportion of aluminum in the hydrogen generating material, the hydrogen generating material preferably includes 80 wt% or more of aluminum. It is also preferable that the proportion of aluminum in the aluminum alloy is, e.g., 85 wt% or more.

The method for pulverizing aluminum or aluminum alloy is not particularly limited, and a mechanical grinding technique using, e.g., a ball mill, sand mill, vibrating mill, or jet mill can be used.

The metal powder produced by the above method can reduce the amount of an oxide and an organic substance present on the surface, include 60 wt% or more of aluminum in the metallic state, and has a carbon content of 0.5 wt% or less. By reducing the moisture content of the treatment solvent, the proportion of aluminum in the metallic state can be increased to 90 wt% or more, as will be described in Examples later. The amount of hydrogen generated is increased as the proportion of aluminum in the metallic state becomes higher. Moreover, there is a small amount of the organic substance on the surface of the metal powder, and thus the hydrogen producing reaction can occur easily.

The carbon content can be measured by a combustion-infrared absorption method using, e.g., a carbon analyzer "EMIA-920V" manufactured by Horiba, Ltd.

The metal powder has metallic luster and is in the form of a flake with a thickness of 5 $\mu$m or less and a longer diameter of several tens of $\mu$m when observed by an electron microscope. The thickness, particle size, specific surface area, or the like of the metal flake material can be adjusted by controlling the pulverization time appropriately.

In view of the hydrogen generation efficiency, the thickness of the metal powder is preferably 5 $\mu$m or less, and more preferably 3 $\mu$m or less. The average particle size of the metal powder is preferably 80 $\mu$m or less, and more preferably 50 $\mu$m or less. The specific surface area of the metal powder is preferably 0.5 $m^2$/g or more, and more preferably 1 $m^2$/g or more.

If the thickness of the metal material is excessively small, although the hydrogen generation rate is increased, it becomes difficult to handle the metal material in the air because the flammability is enhanced. Therefore, the thickness of the metal powder is preferably 0.1 $\mu$m or more. For the same reason, the lower limit of the average particle size is preferably 0.1 $\mu$m or more, and the upper limit of the specific surface area is preferably 50 $m^2$/g or less.

In this specification, the average particle size of the metal powder means a value of 50% diameter of an accumulated volume percentage, i.e., $d_{50}$. This value is measured by a laser diffraction scattering method. According to this method, specifically, the measuring object is dispersed in a liquid phase such as water and irradiated with a laser beam to detect scattering intensity distribution, and the particle size distribution is measured using the scattering intensity distribution. The measuring device for the laser diffraction scattering method may be, e.g., "MICROTRAC HERA" manufactured by Nikkiso Co., Ltd.

The thickness of the metal powder is determined by scanning electron microscope (SEM) observation. The specific surface area of the metal powder is measured by a BET method. The measuring device for the BET method may be, e.g., "MACSORB HM MODEL-1201" manufactured by Mountech Co., Ltd.

The reaction of aluminum and water to produce hydrogen and an oxidation product may be expressed as any one of the following formulas (1) to (3).

$$2Al + 6H_2O \rightarrow Al_2O_3 \cdot 3H_2O + 3H_2 \qquad (1)$$

$$2Al + 4H_2O \rightarrow Al_2O_3 \cdot H_2O + 3H_2 \qquad (2)$$

$$2Al + 3H_2O \rightarrow Al_2O_3 + 3H_2 \qquad (3)$$

With these reactions, aluminum in the bulk state such as a plate, a block, or coarse particles of 1 mm or more in size is stabilized by forming an oxide film on the surface. Therefore, the hydrogen producing reaction stops immediately. However, the smaller the particle size or the thickness is, the less the effect of the oxide film formation becomes, and the hydrogen producing reaction proceeds, although the reason for this is unclear.

The aluminum powder of the hydrogen generating material of the present invention has good reactivity with water and can be used for the generation of hydrogen without any other additives. However, the characteristics of the hydrogen generating material can be improved further by the addition of other components such as a reaction accelerator or a heat generating material in accordance with the purposes. Because of the excellent reactivity of the aluminum powder, a sufficient effect can be obtained even with a small amount of the reaction accelerator or the heat generating material.

The reaction accelerator is an additive that allows the hydrogen producing reaction to proceed efficiently. Examples of the reaction accelerator include hydrophilic oxides (alumina, silica, magnesia, zinc oxide, etc.), water absorbing polymers (carboxymethyl cellulose, polyvinyl alcohol, polyethylene glycol, etc.), and carbon. Although the effects of the above additives are unclear, it is considered that the additives can improve contact between the hydrogen generating material and water or prevent the reaction product from coagulating with the unreacted hydrogen generating material. These additives may be used individually or in combination of two or more.

In view of the hydrogen generation efficiency, the content of the reaction accelerator in the hydrogen generating material is preferably 0.5 wt% or more, and more preferably 1 wt% or more. In view of the amount of hydrogen generated, the content of the reaction accelerator is preferably 20 wt% or less, and more preferably 15 wt% or less so as to increase the proportion of aluminum.

The hydrogen generating material of the present invention reacts with water to produce hydrogen in a reactor.

The reaction of the aluminum powder and water is more likely to proceed at higher temperatures. Therefore, it is preferable that the hydrogen generating material is heated while reacting with water. In such a case, the hydrogen generating material may be heated externally. Moreover, a heat generating material, except for aluminum, that generates heat by reacting with water may coexist with the aluminum powder, and the generated heat can be used. In other words, the water that is supplied to react with the hydrogen generating material also reacts with the heat generating material, and the heat thus generated is used for heating the hydrogen generating material and water.

The heat generating material may be, e.g., an oxide etc. of alkali metals or alkaline-earth metals that generate heat by a reaction with water or hydration, such as calcium oxide, magnesium oxide, calcium chloride, magnesium chloride, or calcium sulfate. Moreover, heated water itself also can be supplied instead of the heat generating material.

In view of a higher hydrogen generation rate, the content of the heat generating material in the hydrogen generating material is preferably 0.5 wt% or more, and more preferably 3 wt% or more. In view of the amount of hydrogen generated, the content of the heat generating material is preferably 15 wt% or less, and more preferably 10 wt% or less so as to increase the proportion of aluminum.

The temperature at which the hydrogen generating material is heated is preferably 40°C or more, but 95°C or less to prevent the evaporation of water. However, when the inside of the reactor is pressurized by the generation of hydrogen, the internal temperature may be raised to about 120°C. The content of the heat generating material in the hydrogen generating material can be determined according to the relationship with the heating temperature.

The external heating process of the hydrogen generating material may use, e.g., electrical heating in which electricity passes through a resistor or an exothermic reaction as a source of heat for externally heating a vessel that contains the hydrogen generating material and water.

The reaction of aluminum and water, i.e., the hydrogen producing reaction is an exothermic reaction. Therefore, when heat of the reaction is prevented from dissipating and used to increase the temperature of the hydrogen generating material and water, hydrogen can be generated continuously without requiring the source of heat. In other words, even if heating is performed only at the beginning of the reaction and stops after the generation of hydrogen, the heated state can be maintained by the heat generated by the hydrogen producing reaction. Moreover, it is possible to control the amount of hydrogen generated by controlling the supply of water that is to react with the hydrogen generating material as well as the heating temperature.

The hydrogen generating material of the present invention is a hydrogen source that can generate hydrogen by reacting with water in a reactor and can be used, e.g., as a fuel source of a fuel cell to produce hydrogen.

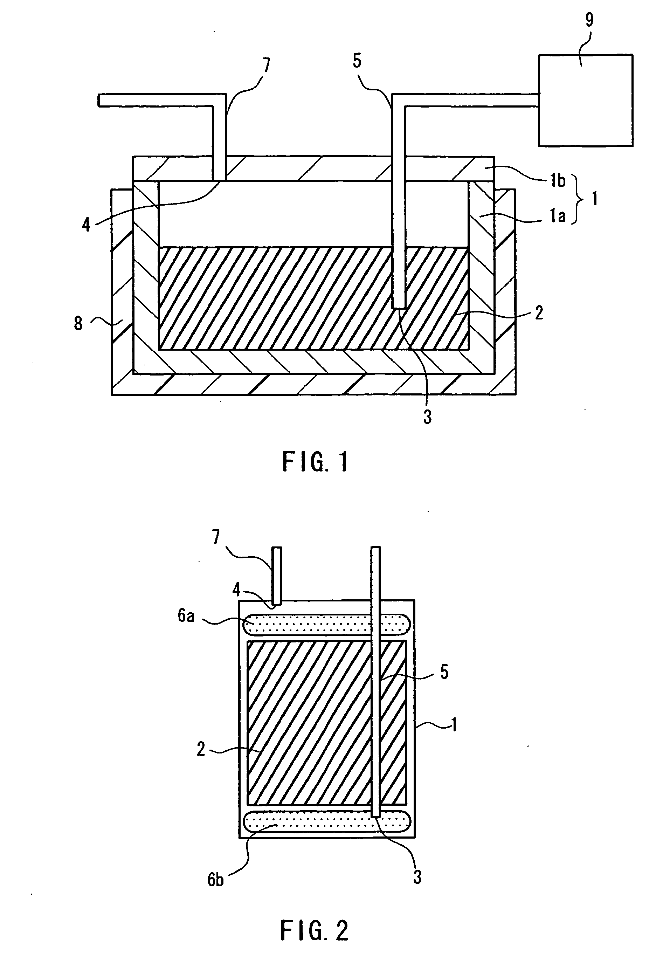

FIG. 1 is a schematic cross-sectional view of an example of a hydrogen generator for generating hydrogen by using the hydrogen generating material of the present invention. This hydrogen generator includes a vessel 1, a water inlet 3, and a hydrogen outlet 4. The vessel 1 includes a body 1a and a cover 1b, and is hermetically sealed to allow the reaction of the hydrogen generating material 2 and water to take place. A micropump 9 can supply water continuously to the hydrogen generating material 2 through a water supply pipe 5 and the water inlet 3. The supplied water reacts with the hydrogen generating material 2 to produce hydrogen in the vessel 1. The generated hydrogen passes through the hydrogen outlet 4 and is drawn from a hydrogen discharge pipe 7 to the outside. In the embodiment of FIG. 1, a heat insulator 8 covers the vessel 1 so that the hydrogen producing reaction is sustained while preventing a decrease in temperature in the vessel during the reaction. In FIG. 1, the micropump 9 is not shown as a cross-sectional view.

The suitable material for the vessel 1 is substantially impermeable to water and hydrogen and does not cause any failure of the vessel even if it is heated at about 100°C. For example, metals such as aluminum, titanium and nickel, resins such as polyethylene, polypropylene and polycarbonate, ceramics such as alumina, silica and titania, and glass (particularly heat-resistance glass) can be used. The water supply pipe 5 and the hydrogen discharge pipe 7 can be made of the same materials as the vessel 1. A material with high thermal insulating properties such as styrofoam may be used for the heat insulator 8. If necessary, a filter such as a gas-liquid separation film may be attached to the hydrogen outlet 4 to prevent the contents of the vessel, except for hydrogen, from getting out.

In view of portability, the hydrogen generator may be in the form of a portable fuel cartridge when it is incorporated into a small fuel cell or portable electronic equipment, as shown in a schematic cross-sectional view of FIG. 2. In the cartridge, the hydrogen generating material 2 is sealed inside the vessel 1. Like the hydrogen generator of FIG. 1, the cartridge includes a water inlet 3 through which water is supplied to the hydrogen generating material 2 and a hydrogen outlet 4 through which hydrogen generated in the vessel 1 is discharged to the outside. The cartridge is inserted into a fuel cell or portable electronic equipment, and water is supplied to the inside of the cartridge through a water supply pipe 5 by using a micropump or the like. Alternatively, another container filled with water may be provided in or adjacent to the cartridge so that the water is supplied to the hydrogen generating material 2 in the vessel 1 after the cartridge is inserted into a fuel cell or portable electronic equipment.

While part of the supplied water is retained by water absorbing materials 6a, 6b, the remainder wets the hydrogen generating material, and then the hydrogen producing reaction starts. The generated hydrogen is supplied to a negative electrode of the fuel cell through a hydrogen discharge pipe 7. Although the water absorbing materials 6a, 6b are not necessarily required, the water retained by them also can be supplied to the hydrogen generating material in accordance with the water consumption resulting from the hydrogen producing reaction. Therefore, a change in the hydrogen generation rate over time can be suppressed to some extent. The water absorbing material is not particularly limited as long as it can absorb and retain water. In general, absorbent cotton or a nonwoven fabric may be used.

Hydrogen produced by reforming a hydrocarbon fuel includes CO and $CO_2$ and thus causes poisoning in a polymer electrolyte fuel cell that operates at 100°C or less. In contrast, hydrogen produced by using the hydrogen generating material of the present invention includes neither of these gases and is not affected by such a problem. Moreover, since the hydrogen producing reaction involves water, the hydrogen gas generated includes a moderate amount of moisture and can be used suitably for the fuel cell that uses hydrogen as a fuel.

Hereinafter, the present invention will be described by way of examples.

Working Example 1

In a grinding pot were placed 6 g of aluminum powder that was produced by an atomizing method and had an average particle size of 55 $\mu$m and a BET specific surface area of 0.6 $m^2/g$ and 18 g of organic solvent that is corrosive to aluminum (shown in Table 1), along with zirconia beads. The grinding pot was set in a planetary ball mill and rotated at a rotational speed of 200 rpm for 1 hour, thereby pulverizing the aluminum powder. Subsequently, the solvent was removed by drying under reduced pressure, so that the intended aluminum powder was obtained. The average particle size of the aluminum powder thus pulverized was measured by a laser diffraction scattering method with "MICROTRAC HRA" manufactured by Nikkiso Co., Ltd. The measurement showed that the average particle size of each of the aluminum powders was several tens of $\mu$m as a value of 50% diameter of an accumulated volume percentage, i.e., $d_{50}$. Moreover, the specific surface area was measured by a BET method with "MACSORB HM MODEL-1201" manufactured by Mountech Co., Ltd., and the aluminum powder pulverized using methanol had a specific surface area of 3.4 $m^2/g$.

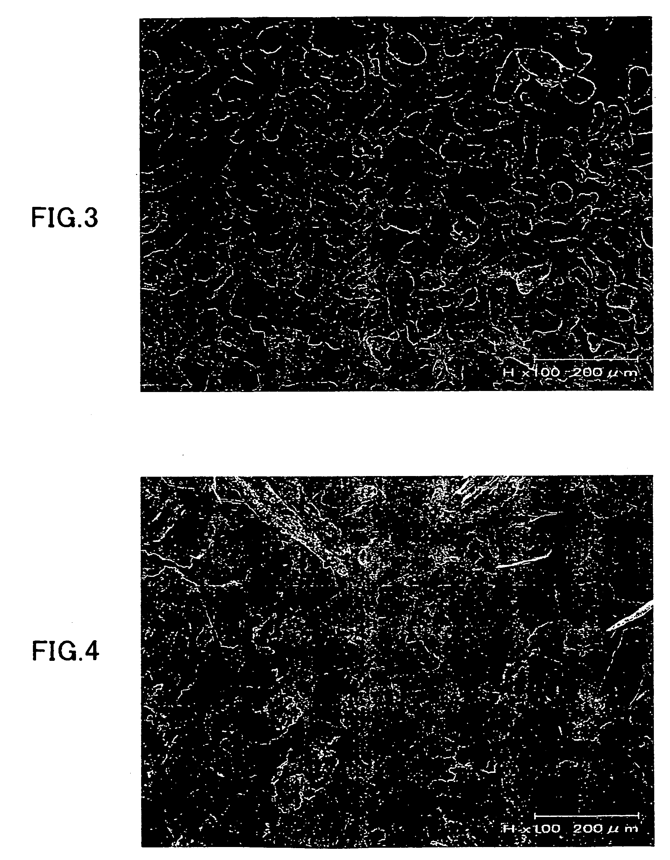

FIGS. 3, 4 and 5 are scanning electron micrographs showing the material powder of aluminum produced by the atomizing method, the aluminum powder pulverized using methanol as a treatment solvent, and the aluminum powder pulverized using 2-methyl-1-propanol as a treatment solvent, respectively. The scanning electron microscope observation confirmed that the material powder in the form of a droplet or potato was changed to particles in the form of a flake with metallic luster, having a longer diameter of about 10 to 200 $\mu$m and a thickness of about 0.5 to 5 $\mu$m. Therefore, the average particle size measured by the laser diffraction scattering method is considered to be the average of the longer diameter of the aluminum powder. The water content of the organic solvents was 1 wt% or less for methanol, 0.5 wt% or less for ethanol, and 0.3 wt% for acetic acid.

Each of the aluminum powders pulverized in the above manner was used independently as a hydrogen generating material, and 1g of the hydrogen generating material and 10 g of water were put in a sampling bottle. A resistor was located outside the sampling bottle. Then, the sampling bottle was heated at 50°C by allowing electricity to pass through the resistor, and the hydrogen generating material reacted with water to produce hydrogen. The hydrogen was collected by a water-displacement method, and the total amount of the collected hydrogen and a change in the amount of the collected hydrogen over time were measured, thereby determining the amount of hydrogen generated 20 hours after the beginning of the reaction and the maximum hydrogen generation rate.

Comparative Example 1

The aluminum powder was pulverized, and the average particle size of the pulverized powder was measured in the same manner as Working Example 1 except that the treatment solvent was toluene. Subsequently, the resultant powder was used as a hydrogen generating material, and the amount of hydrogen generated and the maximum hydrogen generation rate were determined in the same manner as Working Example 1.

Comparative Example 2

The aluminum powder was pulverized in the same manner as Working Example 1 except that the treatment solvent was butyraldehyde. Subsequently, the resultant powder was used as a hydrogen generating material, and the amount of hydrogen generated and the maximum hydrogen generation rate were determined in the same manner as Working Example 1.

Comparative Example 3

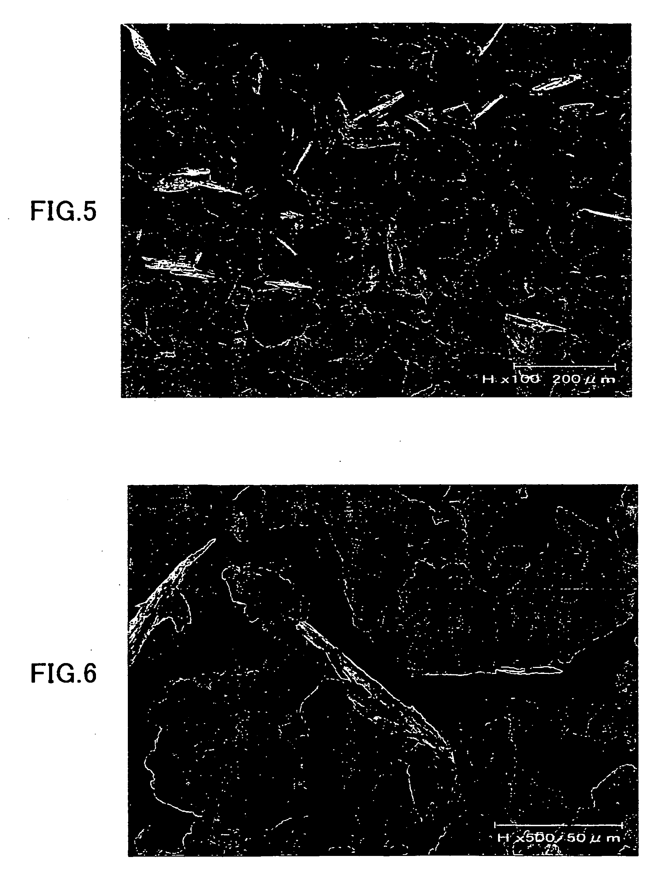

An aluminum powder with an average particle size of 50 $\mu$m was produced by pulverization using a stamping mill in which aluminum stearate was added as stearate. The aluminum powder was used as a hydrogen generating material, and the amount of hydrogen generated and the maximum hydrogen generation rate were determined in the same manner as Working Example 1. FIG. 6 is a scanning electron micrograph of the aluminum powder after the pulverizing process.

Comparative Example 4

The aluminum powder (average particle size: 55 $\mu$m) produced by the atomizing method, as shown in FIG. 3, was used as a hydrogen generating material without being pulverized, and the amount of hydrogen generated and the maximum hydrogen generation rate were determined in the same manner as Working Example 1.

Table 1 shows the results of the measurement of the average particle size, the amount of hydrogen generated, and the maximum hydrogen generation rate of each of the hydrogen generating materials in Working Example 1 and Comparative Examples 1 to 4. In Working Example 1, the average particle sizes of the aluminum powders using methanol, 2-methyl-1-propanol, and benzyl alcohol as a solvent were measured.

TABLE 1

| | Organic solvent used | Average particle size (μm) | Amount of hydrogen generated (mL) | Maximum hydrogen generation rate (mL/min) |
|---|---|---|---|---|
| Working Example 1 | methanol | 43 | 1270 | 80 |
| | ethanol | - | 1110 | 5 |
| | 1-propanol | - | 1100 | 4 |
| | 1-butanol | - | 1030 | 4 |
| | 2-methyl-1-propanol | 59 | 1000 | 10 |
| | ethoxyethanol | - | 1060 | 6 |
| | benzyl alcohol | 64 | 980 | 10 |
| | acetic acid | - | 1224 | 48 |
| Comparative Example 1 | toluene | 22 | 10 | less than 1 |
| Comparative Example 2 | butyraldehyde | - | 0 | 0 |
| Comparative Example 3 | - | 50 | 0 | 0 |
| Comparative Example 4 | - | 55 | 382 | 2 |

In Working Example 1, each of the hydrogen generating materials of the present invention reacted with water to produce hydrogen efficiently, and the amount of hydrogen generated was 72% to 93% of a theoretical value (approximately 1360 ml at room temperature) of the amount of hydrogen generated per 1 g of metal aluminum. In Comparative Example 1, the aluminum powder was pulverized using toluene that is not corrosive to aluminum. Therefore, a considerable powder adhered to the surface of the grinding pot, and the pulverized aluminum powder was only a few grams. Moreover, when the same measurement as Working Example 1 was performed by using the aluminum powder produced in Comparative Example 1, the aluminum powder was floating in water and the hydrogen producing reaction hardly proceeded. Thus, only a very small amount of hydrogen was collected. The aluminum powders of Working Example 1, each of which was treated with the organic solvent that is corrosive to aluminum, may have better affinity for water on the surface, compared to the aluminum powder of Comparative Example 1, which was pulverized using toluene. Therefore, a difference in the surface properties between the aluminum powders by pulverization may affect a difference in their hydrogen generation behaviors. In Comparative Example 2 using butyraldehyde, the pulverization of aluminum did not proceed successfully, and no hydrogen was generated.

In Comparative Example 3, due to the addition of stearate in the pulverizing process, the amount of an organic substance present on the surface was excessively large. Therefore, the hydrogen producing reaction did not proceed because the affinity for water was poor, and the surface of the aluminum powder was not wetted easily. In Comparative Example 4, the hydrogen generating material was an aluminum powder produced by the atomizing method, and each particle was in the form of a thick droplet or potato. Therefore, water was unlikely to penetrate into the core of the particles, and it was difficult to complete the reaction, resulting in low reaction efficiency.

With respect to the aluminum powder pulverized using methanol in Working Example 1 and the aluminum powders in Comparative Examples 3 and 4, the amount of carbon in each of the aluminum powders was measured by a combustion-infrared absorption method to evaluate the amount of an organic substance on the surface. 50 mg of each aluminum powder was weighed out and measured with a carbon analyzer "EMIA-920V" manufactured by Horiba, Ltd., so that the ratio of a weight of carbon to a weight of the aluminum powder was determined as a carbon content. This measurement was performed two times, and the mean value was used as a measure of the organic substance present on the surface of each of the aluminum powders.

Moreover, the contents of aluminum and oxygen in the above three metal powders were measured by X-ray fluorescence analysis, and the amount of aluminum hydroxide formed on the powder surface was determined from the oxygen content. Among the aluminum content thus obtained, the proportion of aluminum in the oxidation state was determined from the amount of aluminum hydroxide, and the remainder was identified as the proportion of aluminum in the metallic state. Table 2 shows the results.

TABLE 2

|  | Additive in pulverizing process | Carbon content (wt%) | Aluminum in metallic state (wt%) |
|---|---|---|---|
| Working Example 1 | methanol | 0.06 | 95 |
| Comparative Example 3 | stearate | 1.3 | 93 |
| Comparative Example 4 | non-additive (untreated) | less than 0.05 | 97 |

The aluminum powder produced by the atomizing method in Comparative Example 4 had substantially no organic substance on the surface, and the carbon content measured was significantly low. For the aluminum powder pulverized using methanol in Working Example 1, the carbon content was hardly increased by the treatment, and there was a slight amount of the organic substance on the surface. On the other hand, the aluminum powder pulverized with a stamping mill in Comparative Example 3 had an extremely high carbon content of 1.3 wt%, and a large amount of the organic substance was attached to the surface. Unlike the treatment in water, the oxidation of aluminum hardly proceeds during the pulverizing process of Working Example 1. Therefore, it is possible to maintain a high proportion of aluminum in the metallic state. This allows hydrogen to be generated with high efficiency of 90% or more of the theoretical value, as described above.

Working Example 2

Aluminum was pulverized, and the average particle size of the pulverized powder was measured in the same manner as Working Example 1 except that methanol and toluene were mixed at each ratio as shown in Table 3 to form a treatment solvent, and the grinding pot containing 18 g of the treatment solvent was rotated for 70 minutes. Subsequently, the amount of hydrogen generated and the maximum hydrogen generation rate were determined in the same manner as Working Example 1. Table 3 shows the results.

TABLE 3

| Ratio of methanol to toluene in treatment solvent (wt%) | | Average particle size ($\mu$m) | Amount of hydrogen generated (mL) | Maximum hydrogen generation rate (mL/min) |
|---|---|---|---|---|
| Methanol | Toluene | | | |
| 100 | 0 | 41 | 1324 | 38 |
| 50 | 50 | 66 | 1305 | 34 |
| 25 | 75 | 78 | 1298 | 31 |
| 10 | 90 | 52 | 1305 | 30 |
| 5 | 95 | 46 | 1293 | 32 |

Even if the treatment solvent used in the pulverizing process included the organic solvent that is inactive to aluminum (toluene) in addition to the organic solvent that is corrosive to aluminum (methanol), hydrogen was generated efficiently in each case, and the amount of hydrogen generated was 95% to 97% of the theoretical value.

Working Example 3

Using the hydrogen generator of FIG. 1, hydrogen was produced in the following procedure. An aluminum powder was produced in the same manner as Working Example 1 by using methanol as an organic solvent. Then, 3.2 g of the aluminum powder was mixed with 0.24 g of $\alpha$-$Al_2O_3$ powder (reaction accelerator) and 0.52 g of calcium oxide (heat generating material) to form a hydrogen generating material. This hydrogen generating material was sealed inside the vessel 1 that was made of aluminum, included the body 1a and the cover 1b, and had a capacity of 9 cm³. Moreover, the vessel 1 was covered with 8 mm thick styrofoam as the heat insulator 8. Thus, the hydrogen generator containing the hydrogen generating material 2 was configured. Next, water was supplied to the inside of the vessel 1 at a flow velocity of 0.023 mL/min through the water supply pipe 5 by using the micropump 9.

As the water supply continued, the temperature of the vessel was increased gradually and reached 70°C after 20 minutes. At this time, the rate of the water supply was increased to 0.11 mL/min, and water continued to be supplied while the flow velocity was kept constant. Consequently, hydrogen was drawn out steadily at a rate of about 30 mL/min for 1.4 hours, and the temperature of the vessel was within the range of 80 to 100°C during this period of time.

Working Example 4

Hydrogen was generated in the same manner as Working Example 1, and a discharge test was conducted by supplying the generated hydrogen to a negative electrode of a polymer electrolyte fuel cell in which a positive electrode and the negative electrode are arranged in layers with a polymer electrolyte membrane sandwiched between them. Consequently, the polymer electrolyte fuel cell provided an output as high as 200 mW/cm² at room temperature. This makes it clear that the hydrogen generating material of the present invention is effective as a fuel source of a small portable fuel cell.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

Industrial Applicability

As described above, the present invention allows hydrogen to be generated easily and efficiently even at a low temperature of 100°C or less, and therefore can be used widely as a fuel source of a fuel cell, particularly a fuel cell for small portable equipment.

Claims

1. A method for producing a hydrogen generating material comprising at least one metal powder selected from the group consisting of an aluminum powder and an aluminum alloy powder, the method comprising:

forming a metal flake powder by pulverizing aluminum or aluminum alloy mechanically in a treatment solvent containing an organic solvent that is corrosive to aluminum,

wherein the treatment solvent contains 1 wt-% or more of the organic solvent that is corrosive to aluminum, and the organic solvent that is corrosive to aluminum is 0.1 parts by weight or more per 1 part by weight of the aluminum to be pulverized.

2. The method for producing a hydrogen generating material according to claim 1, wherein the organic solvent that is corrosive to aluminum contains an alcohol.

3. The method for producing a hydrogen generating material according to claim 1 or 2, wherein the treatment solvent further contains an organic solvent that is inactive to aluminum.

4. The method for producing a hydrogen generating material according to claim 3, wherein the organic solvent that is inactive to aluminum is an aromatic hydrocarbon or aliphatic hydrocarbon.

5. The method for producing a hydrogen generating material according to claim 3, wherein the organic solvent that is inactive to aluminum and the organic solvent that is corrosive to aluminum are mixed to form an azeotropic mixture.

6. The method for producing a hydrogen generating material according to claim 5, wherein the organic solvent that is corrosive to aluminum contains an alcohol, and the organic solvent that is inactive to aluminum contains toluene or cyclohexane.

7. The method for producing a hydrogen generating material according to claim 1, wherein the moisture content of the treatment solvent is reduced such that the metal powder includes 90 wt-% or more of aluminum in a metallic state, and a carbon content of the metal powder measured by a combustion-infrared absorption method is 0.5 wt-% or less.

8. The method according to claim 1, wherein a moisture content of the treatment solvent is 1 wt-% or less.

9. A hydrogen generating material comprising:

at least one metal powder selected from the group consisting of an aluminum powder and an aluminum alloy powder,
wherein the metal powder is in the form of a flake with a thickness of 5 $\mu$m or less and includes 90 wt-% or more of aluminum in a metallic state, and
a carbon content of the metal powder measured by a combustion-infrared absorption method is 0.5 wt-% or less.

10. The hydrogen generating material according to claim 9, wherein the metal powder has a specific surface area of 0.5 $m^2$/g or more.

11. The hydrogen generating material according to claim 9 , wherein the metal powder has an average particle size of 80 $\mu$m or less.

12. The hydrogen generating material according to claim 9, wherein a proportion of aluminum in the hydrogen generating material is 80 wt-% or more.

13. The hydrogen generating material according to claim 9, further comprising at least one material selected from the group consisting of a hydrophilic oxide, carbon and a water absorbing polymer.

14. The hydrogen generating material according to claim 9, further comprising a heat generating material that generates heat by reacting with water and is other than the metal powder.

15. Use of the hydrogen generating material according to one of claims 9 to 14, as a fuel source of a fuel cell.

**Patentansprüche**

1. Verfahren zur Herstellung eines Wasserstoff erzeugenden Materials, welches mindestens ein Metallpulver umfasst, das aus der Gruppe ausgewählt ist, die aus einem Aluminiumpulver und einem Aluminiumlegierungspulver besteht, wobei das Verfahren das Folgende umfasst:

Bilden eines Metallflockenpulvers durch mechanisches Pulverisieren von Aluminium oder Aluminiumlegierung in einem Behandlungslösungsmittel, welches ein organisches Lösungsmittel enthält, das gegenüber Aluminium korrodierend wirkt,

wobei das Behandlungslösungsmittel 1 Gew.-% oder mehr des organischen Lösungsmittels enthält, das gegenüber Aluminium korrodierend wirkt, und das organische Lösungsmittel, das gegenüber Aluminium korrodierend wirkt, 0,1 Gewichtsteile oder mehr je 1 Gewichtsteil des zu pulverisierenden Aluminiums ausmacht.

2. Verfahren zur Herstellung eines Wasserstoff erzeugenden Materials gemäß Anspruch 1, wobei das organische Lösungsmittel, das gegenüber Aluminium korrodierend wirkt, einen Alkohol enthält.

3. Verfahren zur Herstellung eines Wasserstoff erzeugenden Materials gemäß Anspruch 1 oder 2, wobei das Behandlungslösungsmittel ferner ein organisches Lösungsmittel enthält, welches gegenüber Aluminium inaktiv ist.

4. Verfahren zur Herstellung eines Wasserstoff erzeugenden Materials gemäß Anspruch 3, wobei es sich bei dem organischen Lösungsmittel, das gegenüber Aluminium inaktiv ist, um einen aromatischen Kohlenwasserstoff oder einen aliphatischen Kohlenwasserstoff handelt.

5. Verfahren zur Herstellung eines Wasserstoff erzeugenden Materials gemäß Anspruch 3, wobei das organische Lösungsmittel, das gegenüber Aluminium inaktiv ist, und das organische Lösungsmittel, das für Aluminium korrodierend wirkt, vermischt werden, um ein azeotropes Gemisch zu bilden.

6. Verfahren zur Herstellung eines Wasserstoff erzeugenden Materials gemäß Anspruch 5, wobei das organische Lösungsmittel, das für Aluminium korrodierend wirkt, einen Alkohol enthält, und das organische Lösungsmittel, das gegenüber Aluminium inaktiv ist, Toluol oder Cyclohexan enthält.

7. Verfahren zur Herstellung eines Wasserstoff erzeugenden Materials gemäß Anspruch 1, wobei der Feuchtigkeitsgehalt des Behandlungslösungsmittels derart verringert wird, dass das Metallpulver 90 Gew.-% oder mehr Aluminium in einem metallischen Zustand enthält, und ein Kohlenstoffgehalt des Metallpulvers, gemessen über ein Verbrennungs-Infrarotabsorptionsverfahren, 0,5 Gew.-% oder weniger beträgt.

8. Verfahren gemäß Anspruch 1, wobei ein Feuchtigkeitsgehalt des Behandlungslösungsmittels 1 Gew.-% oder weniger beträgt.

9. Wasserstoff erzeugendes Material, welches das Folgende umfasst:

mindestens ein Metallpulver, ausgewählt aus der Gruppe, die aus einem Aluminiumpulver und einem Aluminiumlegierungspulver besteht,

wobei das Metallpulver in Form von Flocken einer Dicke von 5 $\mu$m oder weniger vorliegt und 90 Gew.-% oder mehr Aluminium in einem metallischen Zustand umfasst und

ein Kohlenstoffgehalt des Metallpulvers, gemessen über ein Verbrennungs-Infrarotabsorptionsverfahren, 0,5 Gew.-% oder weniger beträgt.

10. Wasserstoff erzeugendes Material gemäß Anspruch 9, wobei das Metallpulver eine spezifische Oberfläche von 0,5 m$^2$/g oder mehr aufweist.

11. Wasserstoff erzeugendes Material gemäß Anspruch 9, wobei das Metallpulver eine mittlere Teilchengröße von 80 $\mu$m oder weniger aufweist.

12. Wasserstoff erzeugendes Material gemäß Anspruch 9, wobei ein Aluminiumanteil in dem Wasserstoff erzeugenden Material 80 Gew.-% oder mehr beträgt.

13. Wasserstoff erzeugendes Material gemäß Anspruch 9, welches ferner mindestens ein Material umfasst, das aus der Gruppe ausgewählt ist, die aus einem hydrophilen Oxid, Kohlenstoff und einem Wasser absorbierenden Polymer besteht.

14. Wasserstoff erzeugendes Material gemäß Anspruch 9, welches ferner ein Wärme erzeugendes Material umfasst, das durch Reaktion mit Wasser Wärme erzeugt, und bei dem es sich um etwas anderes als das Metallpulver handelt.

**15.** Verwendung des Wasserstoff erzeugenden Materials gemäß einem der Ansprüche 9 bis 14 als Brennstoffquelle einer Brennstoffzelle.

**Revendications**

**1.** Procédé de production d'un matériau générateur d'hydrogène comprenant au moins une poudre métallique sélectionnée dans le groupe consistant en une poudre d'aluminium et une poudre d'alliage d'aluminium, le procédé comprenant :

la formation d'une poudre de flocons métalliques par pulvérisation mécanique d'aluminium ou d'un alliage d'aluminium dans un solvant de traitement contenant un solvant organique qui est corrosif vis-à-vis de l'aluminium,
procédé dans lequel le solvant de traitement contient 1 % en poids, ou plus, du solvant organique qui est corrosif vis-à-vis de l'aluminium, et la quantité de solvant organique qui est corrosif vis-à-vis de l'aluminium est de 0,1 partie en poids, ou plus, pour 1 partie en poids d'aluminium à pulvériser.

**2.** Procédé de production d'un matériau générateur d'hydrogène selon la revendication 1, dans lequel le solvant organique qui est corrosif vis-à-vis de l'aluminium contient un alcool.

**3.** Procédé de production d'un matériau générateur d'hydrogène selon la revendication 1 ou 2, dans lequel le solvant de traitement contient, en outre, un solvant organique qui est inactif vis-à-vis de l'aluminium.

**4.** Procédé de production d'un matériau générateur d'hydrogène selon la revendication 3, dans lequel le solvant organique qui est inactif vis-à-vis de l'aluminium est un hydrocarbure aromatique ou un hydrocarbure aliphatique.

**5.** Procédé de production d'un matériau générateur d'hydrogène selon la revendication 3, dans lequel le solvant organique qui est inactif vis-à-vis de l'aluminium et le solvant organique qui est corrosif vis-à-vis de l'aluminium sont mélangés pour former un mélange azéotropique.

**6.** Procédé de production d'un matériau générateur d'hydrogène selon la revendication 5, dans lequel le solvant organique qui est corrosif vis-à-vis de l'aluminium contient un alcool, et le solvant organique qui est inactif vis-à-vis de l'aluminium contient du toluène ou du cyclohexane.

**7.** Procédé de production d'un matériau générateur d'hydrogène selon la revendication 1, dans lequel la teneur en humidité du solvant de traitement est réduite de telle sorte que la poudre métallique inclut 90 % en poids, ou plus, d'aluminium à l'état métallique, et dans lequel une teneur en carbone de la poudre métallique mesurée par un procédé d'absorption dans l'infrarouge après combustion est de 0,5 % en poids, ou moins.

**8.** Procédé selon la revendication 1, dans lequel une teneur en humidité du solvant de traitement est de 1 % en poids ou moins.

**9.** Matériau générateur d'hydrogène comprenant :

au moins une poudre métallique sélectionnée dans le groupe consistant en une poudre d'aluminium et une poudre d'alliage d'aluminium,
la poudre métallique étant sous la forme de flocons qui ont une épaisseur de 5 $\mu$m, ou moins, et incluant 90 % en poids ou plus d'aluminium à l'état métallique, et
une teneur en carbone de la poudre métallique mesurée par un procédé d'absorption dans l'infrarouge après combustion étant de 0,5 % en poids ou moins.

**10.** Matériau générateur d'hydrogène selon la revendication 9, dans lequel la poudre métallique a une surface massique de 0,5 m$^2$/g ou plus.

**11.** Matériau générateur d'hydrogène selon la revendication 9, dans lequel la poudre métallique a une granulométrie moyenne de 80 $\mu$m ou moins.

**12.** Matériau générateur d'hydrogène selon la revendication 9, dans lequel une proportion d'aluminium dans le matériau générateur d'hydrogène est de 80 % en poids ou plus.

**13.** Matériau générateur d'hydrogène selon la revendication 9, comprenant, en outre, au moins un matériau sélectionné dans le groupe consistant en un oxyde hydrophile, du carbone et un polymère absorbant l'eau.

**14.** Matériau générateur d'hydrogène selon la revendication 9, comprenant, en outre, un matériau générateur de chaleur qui génère de la chaleur par réaction avec de l'eau et qui est autre que la poudre métallique.

**15.** Utilisation du matériau générateur d'hydrogène selon l'une quelconque des revendications 9 à 14, comme source de combustible d'une pile à combustible.

FIG. 1

FIG. 2

FIG.3

FIG.4

FIG.5

FIG.6

**REFERENCES CITED IN THE DESCRIPTION**

**Patent documents cited in the description**

- US 6506360 B
- JP 2566248 B
- JP 2004231466 A
- JP 2001031401 A
- US 6582676 B